# EUROPEAN PATENT SPECIFICATION

(11) **EP 2 413 222 B1**
(45) Date of publication and mention of the grant of the patent: **12.09.2018**
(21) Application number: 09842040.9
(22) Date of filing: 02.07.2009
(51) Int. Cl.: G06F 3/044

(54) **CIRCUIT STRUCTURE OF CAPACITIVE TOUCH PANEL**
SCHALTUNGSSTRUKTUR EINES KAPAZITIVEN TOUCH PANEL
STRUCTURE DE CIRCUIT DE PANNEAU TACTILE CAPACITIF

(30) Priority: 24.03.2009 CN 200910129396
(43) Date of publication of application: 01.02.2012
(73) Proprietor: TPK Touch Solutions (Xiamen) Inc., Fujian 361009 (CN)
(72) Inventor: LIU, Chenyu, Taiwan (CN); WANG, Chingyi, Taiwan (CN)
(74) Representative: 2K Patentanwälte Blasberg Kewitz & Reichel
(86) International application number: PCT/CN2009/000751
(87) International publication number: WO 2010/108303

(56) References cited:
- WO-A2-2005/114369
- CN-A- 101 261 379
- CN-A- 101 334 702
- CN-Y- 201 078 769
- FR-A1- 2 589 599
- KR-A- 20090 011 244
- US-A1- 2005 270 039
- US-A1- 2007 247 443
- US-A1- 2008 136 787
- US-A1- 2008 252 608
- US-A1- 2009 021 267
- US-B1- 6 188 391

## Description

### Technical Field

The present invention is related to a circuit pattern for a capacitive touch panel, and more particularly is related to a circuit pattern for a capacitive touch panel used to reduce the impedance of the circuit pattern in the capacitive touch panel.

### Prior Art

In recent years, the utilization of the capacitive touch panel is more and more popular, and it may replace the mouse in the future. The user doesn't need to spend too much time in learning how to use the mouse, and the fingers are used to replace the keyboard, the mouse and the touch pen, so that the user can instinctively and simply browse the internet, check email or operate other application software.

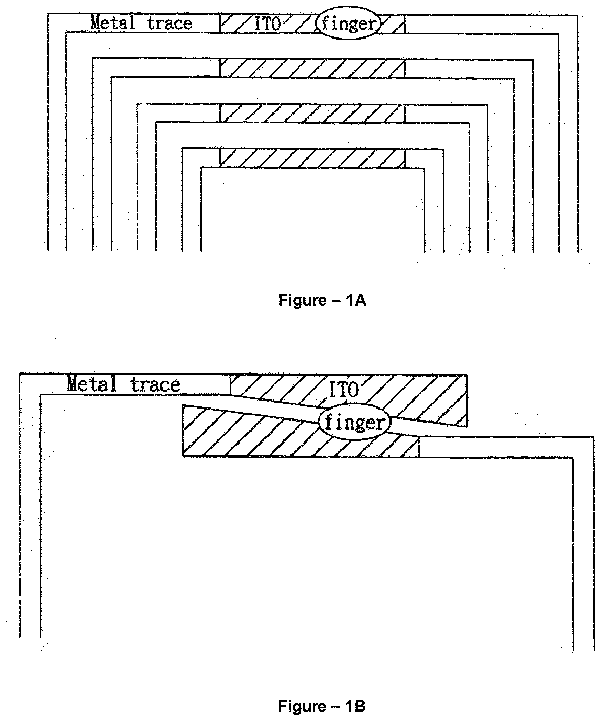

The conventional capacitive touch panel is coating a circuit pattern, such as Indium Tim Oxide (ITO) or Antimony Tin Oxide (ATO), on a transparent glass. When the human finger touches on the capacitive touch panel, the human finger will absorb a little current from the touch panel and the touch panel will calculate the percentage of the absorbed current to find the X-axis Y-axis coordinate of the touch location. The U.S. patent number 6,961,049 disclosed a circuit pattern with two conductive ends in a capacitive touch panel, as shown in Fig. 1A and the U.S. patent number 6,297,811 disclosed a circuit pattern with single conductive end in a capacitive touch panel, as shown in Fig. 1B. However, the impedances of the circuit patterns in the prior arts described above are large enough to weaken the touch signal. Therefore, the touch signal transmitted in the touch panel will be affected and the touch location will be determined at the wrong position. The reliability of the touch panel will be decreased.

The disclosure US 2005/270039 A1 discloses a circuit pattern as specified in the preamble of independent claim 1.

Therefore, there is a need to design a circuit pattern to reduce the impedance of the circuit pattern so as to increase the reliability of the touch panel.

### Brief Description of the Invention

One aspect of the present invention is an apparatus as defined in independent claim 1. Further embodiments of the invention are specified in the respective appended dependent claims.

### Objective of the Invention

The main object of the present invention is to provide a circuit pattern of a capacitive touch panel used to reduce the impedance of the circuit pattern.

The other object of the present invention is to provide a circuit pattern of a capacitive touch panel used to enhance the signal transmitting accuracy of the touch panel.

### Description of the Drawings

The foregoing aspects and many of the attendant advantages of this invention will become more readily appreciated as the same becomes better understood by reference to the following detailed description, when taken in conjunction with the accompanying drawings, wherein:
Figure 1A and Figure 1B are views showing a conventional capacitive touch panel in the prior art.
Figure 2A and Figure 2B are views showing a first embodiment of the capacitive touch panel; this embodiment does not form an embodiment of the invention as claimed.
Figure 3A and Figure 3B are views showing a second embodiment of the capacitive touch panel; this embodiment does not form an embodiment of the invention as claimed.
Figure 4A and Figure 4B are views showing a first embodiment of the capacitive touch panel in the present invention.
Figure 5A and Figure 5B are views showing a third embodiment of the capacitive touch panel; this embodiment does not form an embodiment of the invention as claimed.

### Disclosure of the Invention

Some sample embodiments of the invention will now be described in greater detail. Nevertheless, it should be recognized that the present invention can be practiced in a wide range of other embodiments besides those explicitly described, and the scope of the present invention is expressly not limited except as specified in the accompanying claims.

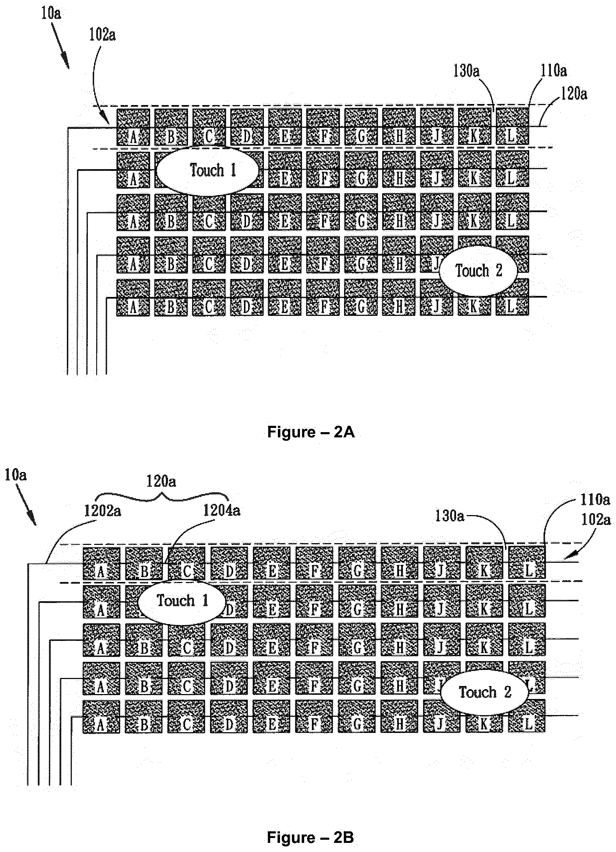

Fig. 2A is a view showing a first embodiment of the capacitive touch panel. As shown in Fig. 2A, the circuit pattern 10a of the capacitive touch panel includes at least one sensing electrode group 102a. Each of the sensing electrode groups 102a includes several electrode sensing blocks 110a and a low impedance metal lead 120a. Each of the electrode sensing blocks 110a includes the same surface area. The sensing electrode blocks 110a are electrically isolated to each other and each of the sensing electrode blocks 110a is electrically connected to the metal lead 120a. There are several intervals 130a with the same distance in the circuit pattern 10a and each of the intervals is disposed between the electrode sensing blocks 110a. By cutting the circuit pattern of the conventional capacitive touch panel to be several electrode sensing blocks, a low impedance metal lead 120a is then used to connect with each of the electrode sensing block 110a to be the circuit pattern 10a of the capacitive touch panel in the present invention. Because the conventional circuit pattern is an electrode structure with high impedance, it would cause the signal delay during the signal transmitting. The circuit pattern is cut into several electrode sensing blocks 110a and the electrode sensing blocks 110a are electrically isolated to each other. And the low impedance metal lead 120a is used to stack with the electrode sensing blocks 110a in parallel to reduce the impedance during the signal transmitting so as to enhance the transmitting efficiency of the capacitive sensing signal. When touch 1 and touch 2 are touching on the electrode sensing blocks 110a, a capacitive touching signal will be generated in accordance with the different touch area and the different touch position.

Moreover, the low impedance metal lead 120a in Fig. 2A will have different layout in another embodiment, as shown in Fig. 2B. Comparing to the circuit pattern 10a of the capacitive touch panel in Fig. 2A, the low impedance metal lead 120a is divided into the first low impedance metal lead 1202a and the second low impedance metal lead 1204a in the embodiment of Fig. 2B. The first low impedance metal lead 1202a is used to connect with the electrode sensing block 110a and the capacitive touch panel to output the capacitive signal. The second low impedance metal lead 1204a is used to connect with the electrode sensing blocks 110a. The signal transmitting impedance is decreased in accordance with the characteristic of the low impedance metal lead 120a and a lot of electrode sensing blocks 110a connected to each other so as to increase the transmitting efficiency of the capacitive touch signal.

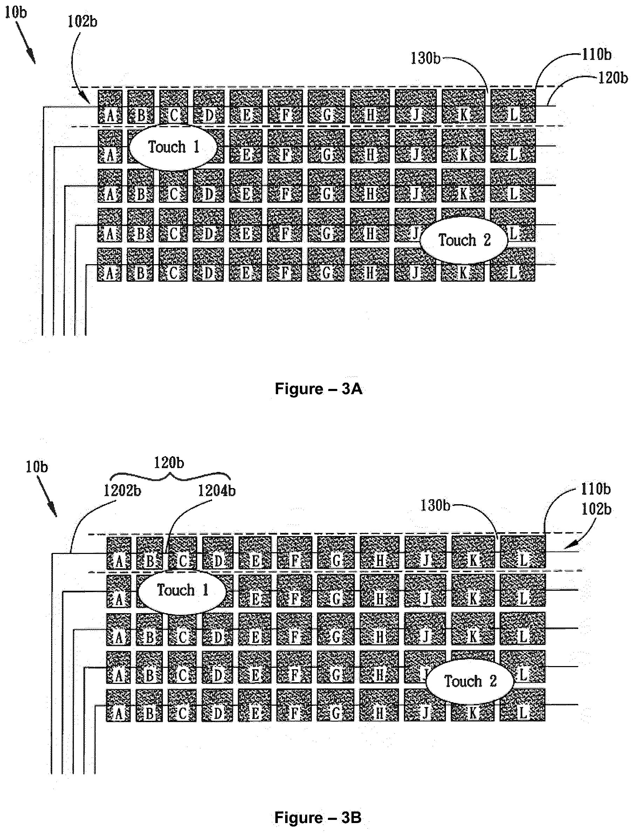

Fig. 3A is a view showing a second embodiment of the capacitive touch panel. As shown in Fig. 3A, the capacitive touch panel 10b in the present embodiment also includes at least one electrode sensing group 102b. Each of the electrode sensing groups 102b includes several electrode sensing blocks 110b and at least one low impedance metal lead 120b. Each of the electrode sensing blocks 110b includes the different surface area. The low impedance metal lead 120b is stacked over and connected to the electrode sensing blocks 110b in parallel. The electrode sensing blocks 110b are arranged in accordance with an arithmetic progression or a geometric progression. There are several intervals 130b with the same distance in the circuit pattern 10b and each of the intervals 130b is also disposed between the electrode sensing blocks 110b. When touch 1 and touch 2 are touching on the electrode sensing blocks 110b, a capacitive touching signal will be generated in accordance with the different touch area and the different touch position.

Moreover, the low impedance metal lead 120b in Fig. 3A will have different layout in another embodiment, as shown in Fig. 3B. Comparing to the circuit pattern 10b of the capacitive touch panel in Fig. 3A, the low impedance metal lead 120b is divided into the first low impedance metal lead 1202b and the second low impedance metal lead 1204b in the embodiment of Fig. 3B. The first low impedance metal lead 1202b is used to connect with the electrode sensing block 110b and the capacitive touch panel to output the capacitive signal. The second low impedance metal lead 1204b is used to connect with the electrode sensing blocks 110b. The signal transmitting impedance is decreased in accordance with the characteristic of the low impedance metal lead 120b and a lot of electrode sensing blocks 120b connected to each other so as to increase the transmitting efficiency of the capacitive touch signal.

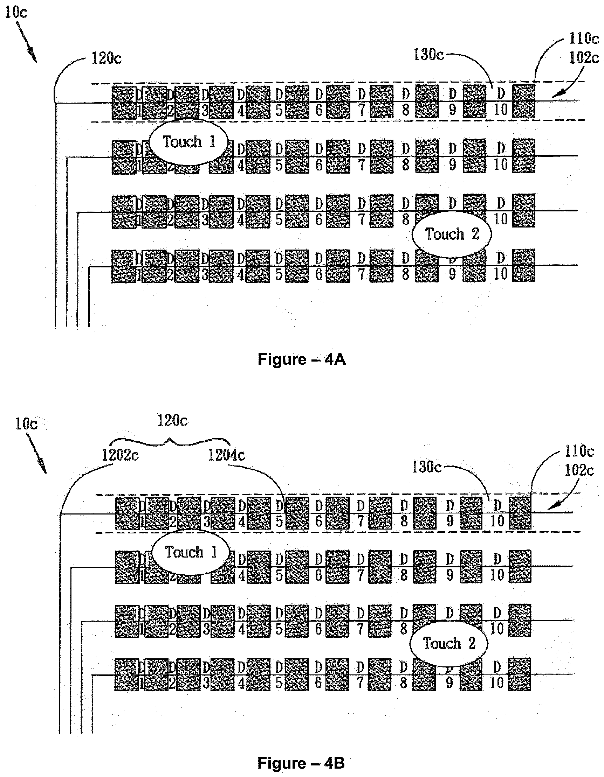

Fig. 4A is a first embodiment of the capacitive touch panel in accordance with the present invention. The circuit pattern 10c in the capacitive touch panel of the present embodiment also includes at least one electrode sensing group 102c. Each of the electrode sensing group 102c includes several electrode sensing blocks 110c, a low impedance metal lead 120c and several intervals 130c disposed between the electrode sensing blocks 110c. The electrode sensing block 110c and the low impedance metal lead 120c are stacked together and connected in parallel. By cutting the circuit pattern of the capacitive touch panel to be several electrode sensing blocks 110c, the characteristic of the low impedance metal lead 120c and the layout of stacking the electrode sensing block 110c and the low impedance metal lead 120c are used to reduce the signal transmitting impedance so as to enhance the transmitting efficiency of the capacitive sensing signal. By comparing with the first embodiment and the second embodiment, each of the electrode sensing blocks 110c includes the same surface area, but the interval 130c are of different distance. The intervals 130c with different distance are arranged in accordance with an arithmetic progression or a geometric progression. The low impedance metal lead 120c is also connected with the electrode sensing blocks 110c and the intervals 130c to be the circuit pattern 10c of the capacitive touch panel. When touch 1 and touch 2 are touching on the electrode sensing blocks 110c, a capacitive touching signal will be generated in accordance with the different touch area and the different touch position. When the capacitive touching signal is generated, the X/Y axis location of the touch point can be calculated. In addition, it should be noted that, in a different embodiment, the low impedance metal lead 120c is able to connect with each of the electrode sensing blocks 110c and the circuit pattern 10c of the capacitive touch panel as the layout shown in Fig. 4B. The low impedance metal lead 120c is divided into the first low impedance metal lead 1202c and the second low impedance metal lead 1204c. The first low impedance metal lead 1202c is electrically connected with the electrode sensing blocks 110c and used to transmit out the capacitive sensing signal. The second low impedance metal lead 1204c is electrically connected with the electrode sensing blocks. The signal transmitting impedance is decreased in accordance with the characteristic of the low impedance metal lead 120c and a lot of electrode sensing blocks connected to each other so as to increase the transmitting efficiency of the capacitive touch signal.

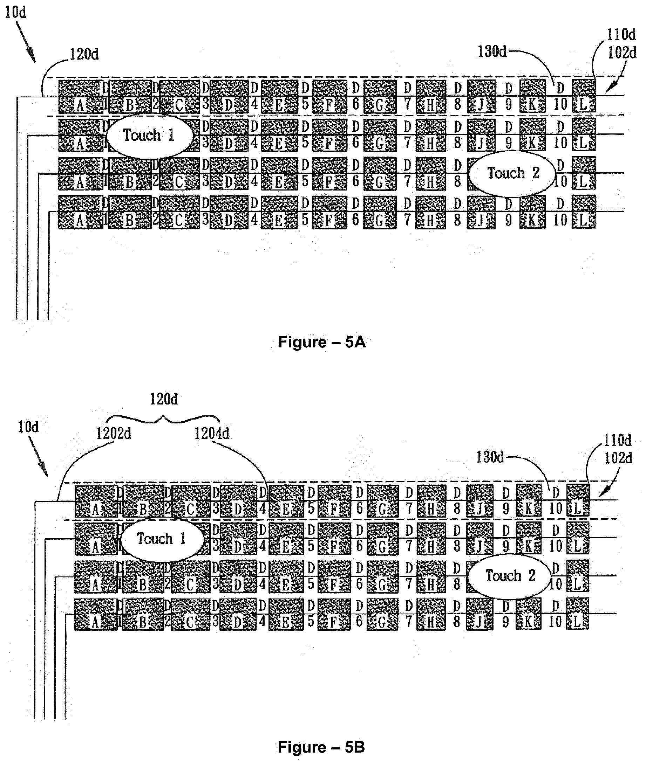

Fig. 5A is still another embodiment of the capacitive touch panel. The circuit pattern 10d in the capacitive touch panel of the present embodiment also includes at least one electrode sensing group 102d. Each of the electrode sensing group 102d includes several electrode sensing blocks 110d, several low impedance metal leads 120d and several intervals 130d. Each of the intervals 130d is disposed between the electrode sensing blocks 110d. The electrode sensing block 110d and the low impedance metal lead 120d are stacked together and connected in parallel. By cutting the circuit pattern of the capacitive touch panel to be several electrode sensing blocks 110d, the characteristic of the low impedance metal lead 120d and the layout of stacking the electrode sensing block 110d and the low impedance metal lead 120d are used to reduce the signal transmitting impedance so as to enhance the transmitting efficiency of the capacitive sensing signal. Comparing with the previous embodiments, each of the electrode sensing blocks 110d includes different surface area and the intervals 130d are of different distance. The electrode sensing block 110d and the intervals 130d with different distance are arranged in accordance with an arithmetic progression or a geometric progression. The low impedance metal lead 120d is also connected with the electrode sensing blocks 110d and the intervals 130d to be the circuit pattern of the capacitive touch panel 10d. By changing the surface area of the electrode sensing block 110d and the distance of the interval 130d, for example, the surface area of the electrode sensing block 110d is decreased and the distance of the interval 130d in each of the electrode sensing group 102d is increased from left to right (as shown in Fig. 5A). Because the touching area is different when the finger is touched on the capacitive touch panel, a capacitive touching signal will be generated in accordance with the different touch area and the different touch position. In addition, it should be noted that, in a different embodiment, the low impedance metal lead 120d is able to connect with each of the electrode sensing blocks 110d and the circuit pattern 10d of the capacitive touch panel as the layout shown in Fig. 5B. The low impedance metal lead 120d is divided into the first low impedance metal lead 1202d and the second low impedance metal lead 1204d. The first low impedance metal lead 1202d is electrically connected with the electrode sensing blocks 110d and used to transmit out the capacitive sensing signal. The second low impedance metal lead 1204d is electrically connected with the electrode sensing blocks. The signal transmitting impedance is decreased in accordance with the characteristic of the low impedance metal lead 120d and a lot of electrode sensing blocks connected to each other so as to increase the transmitting efficiency of the capacitive touch signal.

The capacitive touch panels in the previous embodiments are the circuit patterns with single conductive end. However, in different embodiments, the circuit pattern of the capacitive touch panel is the circuit pattern with dual conductive end. The electrode sensing block can be made by Indium Tim Oxide (ITO). But, in a different embodiment, the electrode sensing block in the present invention can be made by other chemical compound, such as Indium Zinc Oxide (IZO) and it is not limited herein. Moreover, it should be noted that the capacitive touch panel in the present invention is preferred to be a single layer capacitive touch panel. However, in a different embodiment, the capacitive touch panel can be a multi-layers capacitive touch panel and it is not limited herein.

Although specific embodiments have been illustrated and described, it will be appreciated by those skilled in the art that various modifications may be made without departing from the scope of the present invention, which is intended to be limited solely by the appended claims.

## Claims

1. A circuit pattern (10a, 10b, 10c, 10d) for a capacitive touch panel comprising:
a plurality of sensing electrode groups (102a, 102b, 102c, 102), and each of said sensing electrode group (102a, 102b, 102c, 102) includes:
- at least one metal lead (120a, 120b, 120c, 120d); and
- a plurality of electrode sensing blocks (110a, 110b, 110c, 110d) electrically isolated to each other respectively, wherein two of said plurality of electrode sensing blocks (110a, 110b, 110c, 110d) are spaced apart by an interval (130a, 130b, 130c, 130d) with said at least one metal lead electrically connecting said plurality of electrode sensing blocks; and each of said sensing electrode group (102a, 102b, 102c, 102) outputs a capacitive signal in accordance with at least one touch position via one of said metal leads (120a, 120b, 120c, 120d),
**characterized in that** said at least one metal lead (120a, 120b, 120c, 120d) is made of a low impedance material, and each of said intervals (130c, 130d) has a different distance, the area of each of said electrode sensing blocks (110c) is the same and said circuit pattern (10c) outputs said capacitive signal in accordance with different touch areas of said plurality of electrode sensing groups covered by different touch positions.

2. The circuit pattern (10a, 10b, 10c, 10d) of claim 1, wherein said electrode sensing blocks (110a, 110b, 110c, 110d) are made of Indium Tin Oxide.

3. The circuit pattern (10a, 10b, 10c, 10d) of claim 1, wherein
said at least one metal lead (120a, 120b, 120c, 120d) includes a plurality of first metal leads (1202a, 1202b, 1202c, 1202d) and a plurality of second metal leads (1204a, 1204b, 1204c, 1204d), and each of said first metal leads (1202a, 1202b, 1202c, 1202d) is used to electrically connect said electrode sensing block (110a, 110b, 110c, 110d) to transmit out a capacitive sensing signal, and each of said second metal leads (1204a, 1204b, 1204c, 1204d) is used to electrically connect with each of said electrode sensing blocks (110a, 110b, 110c, 110d).

4. The circuit pattern (10a, 10b, 10c, 10d) of claim 1, wherein said plurality of electrode sensing blocks (110a, 110b, 110c, 110d) and said plurality of metal leads (120a, 120b, 120c, 120d) are stacked to each other and connected in parallel.

## Patentansprüche

1. Schaltungsstruktur (10a, 10b, 10c, 10d) für ein kapazitives Touchpanel, umfassend:
eine Vielzahl von Sensorelektrodengruppen (102a, 102b, 102c, 102), und wobei jede der Sensorelektrodengruppen (102a, 102b, 102c, 102) umfasst:
mindestens eine metallische Leitung (120a, 120b, 120c, 120d); und
eine Vielzahl von Elektrodensensorblöcken (110a, 110b, 110c, 110d), die jeweils elektrisch voneinander isoliert sind, wobei zwei der Vielzahl von Elektrodensensorblöcken (110a, 110b, 110c, 110d) durch einen Abstand (130a, 130b, 130c, 130d) voneinander beabstandet sind, wobei mit der mindestens einen metallischen Leitung die Sensorefektrodengruppen (102a, 102b, 102c, 102) elektrisch verbunden sind, und wobei jede der Sensorelektrodengruppen (102a, 102b, 102c, 102) über eine der metallischen Leitungen (120a, 120b, 120c, 120d) ein kapazitives Signal gemäß mindestens einer Berührungsposition ausgibt,
**dadurch gekennzeichnet, dass**
die mindestens eine metallische Leitung (120a, 120b, 120c, 120d) aus einem niederohmigen Material gefertigt ist, und
jeder der Abstände (130c, 130d) ein anderen Abstand ist, wobei der Bereich jedes der Elektrodensensorblöcke (110c) derselbe ist und die Schaltungsstruktur (1 0c) das kapazitive Signal gemäß den verschiedenen Touchbereichen der Sensorelektrodengruppen ausgibt, die von verschiedenen Touchposition bedeckt sind.

2. Schaltungsstruktur (10a, 10b, 10c, 10d) nach Anspruch 1, wobei die Elektrodensensorblöcke (110a, 110b, 110c, 110d) aus Indiumzinnoxid gefertigt sind.

3. Schaltungsstruktur (10a, 10b, 10c, 10d) nach Anspruch 1, wobei die mindestens eine metallische Leitung (120a, 120b, 120c, 120d) eine Vielzahl von ersten metallischen Leitungen (1202a, 1202b, 1202c, 1202d) und eine Vielzahl von zweiten metallischen Leitungen (1204a, 1204b, 1204c, 1204d) umfasst, und jede der ersten metallischen Leitungen (1202a, 1202b, 1202c), 1202d) verwendet wird, um den Elektrodensensorblock (110a, 110b, 110c, 110d) elektrisch zu verbinden, um ein kapazitives Abtastsignal zu übertragen, und jede der zweiten metallische Leitungen (1204a, 1204b, 1204c, 1204d) verwendet wird, um jeden der Elektroden-Sensorblöcke (110a, 110b, 110c, 110d) elektrisch zu verbinden.

4. Schaltungsstruktur (10a, 10b, 10c, 10d) nach Anspruch 1, wobei die Vielzahl der Elektrodensensorblöcke (110a, 110b, 110c, 110d) und die Vielzahl der metallischen Leitungen (120a, 120b, 120c, 120d) miteinander geschichtet und parallel verbunden sind.

## Revendications

1. Un circuit (10a, 10b, 10c, 10d) pour un panneau tactile capacitif comprenant :
Une pluralité de groupes d'électrodes de détection (102a, 102b, 102c, 102), et chacun desdits groupes d'électrodes de détection (102a, 102b, 102c, 102) comprend :
- au moins un conducteur métallique (120a, 120b, 120c, 120d) ; et
- une pluralité de blocs de détection d'électrode (110a, 110b, 110c, 110d) électriquement isolés les uns des autres respectivement, dans lequel deux parmi ladite pluralité de blocs de détection d'électrodes (110a, 110b, 110c, 110d) sont espacés d'un intervalle (130a, 130b, 130c, 130d) avec au moins ledit conducteur métallique connectant électriquement ladite pluralité de blocs de détection d'électrodes ; et chacun desdits groupes d'électrode de détection (102a, 102b, 102c, 102) génère en sortie un signal capacitif en fonction d'une position tactile au moins via l'un desdits conducteurs métalliques (120a, 120b, 120c, 120d),
**caractérisé en ce que**
ledit conducteur métallique au moins (120a, 120b, 120c, 120d) est réalisé en matériau à faible impédance, et chacun des intervalles (130c, 130d) présente une distance différence, la surface de chacun desdits blocs de détection d'électrodes (110c) est la même et chaque circuit (10c) génère en sortie ledit signal capacitif en fonction de différentes surfaces tactiles desdits groupes de détection d'électrode couvertes par différentes positions tactiles.

2. Le circuit (10a, 10b, 10c, 10d) de la revendication 1, dans lequel lesdits blocs de détection d'électrode (110a, 110b, 110c, 110d) sont réalisés d'étain et d'indium.

3. Le circuit (10a, 10b, 10c, 10d) de la revendication 1, dans lequel ledit conducteur métallique au moins (120a, 120b, 120c, 120d) comporte une pluralité de premiers conducteurs métalliques (1202a, 1202b, 1202c, 1202d) et une pluralité de seconds conducteurs métalliques (1204a, 1204b, 1204c, 1204d), et chacun desdits premiers conducteurs métalliques (1202a, 1202b, 1202c, 1202d) est utilisé pour une connexion électrique dudit bloc de détection d'électrode (110a, 110b, 110c, 110d) pour transmettre en sortie un signal de détection capacitif, et chacun desdits second conducteurs métalliques (1204a, 1204b, 1204c, 1204d) est utilisé pour une connexion électrique avec chacun desdits blocs de détection d'électrodes (110a, 110b, 110c, 110d).

4. Le circuit (10a, 10b, 10c, 10d) de la revendication 1, dans lequel ladite pluralité de blocs de détection d'électrodes (110a, 110b, 110c, 110d) et ladite pluralité de conducteurs métalliques (120a, 120b, 120c, 120d) sont empilées les uns sur les autres et connectées en parallèle.
